# EUROPEAN PATENT SPECIFICATION

(11) **EP 1 647 111 B1**
(45) Date of publication and mention of the grant of the patent: **27.11.2013**
(21) Application number: 04778598.5
(22) Date of filing: 21.07.2004
(51) Int. Cl.: H04L 12/14, H04L 29/06, H04M 15/00, H04M 17/00, H04W 4/24, H04W 12/06, H04W 4/26

(54) **METHOD AND APPARATUS FOR CONTROLLING CREDIT BASED ACCESS (PREPAID) TO A WIRELESS NETWORK**
VERFAHREN UND VORRICHTUNG ZUR STEUERUNG VON AUF KREDIT BASIERENDEM ZUGANG (PREPAID) ZU EINEM DRAHTLOSEN NETZWERK
PROCEDE ET APPAREIL DE GESTION D'ACCES PREPAYE A UN RESEAU RADIO

(30) Priority: 22.07.2003 US 489307 P
(43) Date of publication of application: 19.04.2006
(73) Proprietor: Thomson Licensing, 92130 Issy-les-Moulineaux (FR)
(72) Inventor: MODY, Sachin, Satish, Lawrenceville, NJ 08648 (US); MATHUR, Saurabh, 08852 Monmouth Junction (US); WANG, Charles, Chuanming, Jamison, PA 18929 (US)
(74) Representative: Ruellan-Lemonnier, Brigitte
(86) International application number: PCT/US2004/023163
(87) International publication number: WO 2005/011205

(56) References cited:
- EP-A- 1 246 445
- EP-A- 1 320 214
- US-A1- 2002 116 338
- WEI-LING WANG ET AL: "A protocol for billing mobile network access devices operating in foreign networks" PROCEEDINGS - THE WORKSHOP ON ENABLING TECHNOLOGIES: INFRASTRUCTURE FOR COLLABORATIVE ENTERPRISES, IEEE COMPUTER SOCIETY PRESS, LOS ALAMITOS, CA, US, 17 June 1998 (1998-06-17), pages 262-268, XP002145933 ISSN: 1080-1383

## Description

### TECHNICAL FIELD

This invention relates to access and authorization control in wireless networks. More particularly, the invention concerns de-authenticating or disassociating a user from a public or private wireless local area network (WLAN) based on the expiration of credit being used by the user to gain access to the WLAN.

### BACKGROUND

A wireless local area network (WLAN) generally represents a telecommunications network that allows data communications between computers, or between computers and other communication systems using radio frequency (RF) or optical signals, rather than through wires or other physical communication lines. The WLAN has been fairly recently developed owing to rapid developments of Internet services and wireless telecommunication technologies. Because of conveniences for networking and maintenance, the WLAN is increasingly used particularly in the areas where networking with wires or other physical communication lines is not feasible, such as building-to-building networking, networking in large offices or logistics centers, and the like.

Telecommunication service providers have also recently introduced a high-speed wireless Internet service by adapting WLAN technologies that have mainly been used for indoor private networking to outdoor public networking, wherein the Internet services can be accessed in so-called hot spot areas by authorized users who have registered their own identification (ID) codes and passwords through a predetermined registration process. Such publicly accessible facilities, such as rest stops, cafes, shopping malls, airports, and libraries, allow mobile communication devices to access a private data network or a public data network, such as a company's Intranet or the Internet, for a fee. Upon entering such a publicly accessible facility, the mobile communication device establishes a communication link, typically over a wireless channel, with an access point (AP) to access the wireless LAN, and the public or private network there beyond. Presently, user authentication in a wireless LAN (WLAN) environment involves the use of an authentication server, such as a Remote Authentication Dial-In User Service (RADIUS) server, with access control software being an 802.1x extensible authentication protocol (EAP) based on the WLAN standard. Other exemplary implementations include both wired and wireless communication protocols. Here, users can gain access after an authentication process.

In a conventional public WLAN service system, an authentication process is carried out when a user tries to access the network and includes an authentication confirmation process that is repeatedly carried out through an authentication server whenever the user tries to access the network. According to the IEEE 802.1x standard, a user can use a physical port of an access point (AP) only after the user obtains authorization to use the physical port of the AP from the authentication server.

Methods for controlling access to networks through WLAN connections have relied on the centralized billing functions of service providers. Customers of such providers typically pay for access to the network on a subscription basis, whether by the month or the day and with or without usage limitations. Customer accounts are maintained on the service provider's centralized database. That portion of the network that responds to an authentication challenge (e.g., the RADIUS server) is maintained with the identification information of customers whose accounts have met the service provider's payment requirements, whether for prepayment or payment in arrears within a certain time period. Even service providers that provide ad hoc access, such as a single day's access (or hourly) from an airport, rely on centralized billing and settlement systems and batch updates to their authentication database.

In such configuration as described above, the AP acts as an intermediary or "go-between" for the user of the mobile communications device and the authentication server. When a user establishes a radio connection with an AP in a WLAN environment, the AP begins the authentication process by requesting user credential information. The AP then forwards the user credential information to the authentication server for verification and authorization for WLAN access. The authentication server returns a success or failure message to the AP based on the credentials received and, based on this result, the AP grants or denies access to the user.

User account information such as credit balance, authentication information, and the like are stored in a data base accessible by the authentication server such as the RADIUS server. However, such credit-based WLAN access requires termination of user access when the account balance of the user is no longer sufficient for WLAN access. At the present time, current protocols do not permit the authentication server such as the RADIUS server to send an unsolicited message to the AP.

US 2002/116338 discloses a method for performing prepaid for WLAN system. Details on the accounting details, and on the re-authentication process performed when the user credit has expired are given.

Hence it would be desirable to provide a method and system capable of providing de-authentication and disassociation of a previously authenticated user from the WLAN based on credit information.

### BRIEF SUMMARY OF THE INVENTION

The invention is disclosed in method claim 1 and system claim 9.

For example, a method for de-authenticating a mobile communications device (which may also be called a "client") from a network based on a credit based access control comprises: receiving by an access point (AP) in the network a user request for user access from the client device according to an authentication protocol; transmitting by the AP an access request to an authentication server in response to the user request; receiving by the AP an access response from the authentication server authenticating the user access for the client device, the access response containing a parameter having a value indicative of an amount of available access of the client device to the network based on remaining user credit; determining a remaining amount of available access of the client device in response to usage of the network by the client device and said parameter; transmitting, by the AP, a first re-authorization request to the client device in response to the remaining amount of available access reaching a threshold value to cause a re-authentication of the client device with the network to occur; receiving, by the AP, a first re-authorization response from the client device, in response to the first re-authorization request; and transmitting a re-authentication request to the authentication server by the AP before granting further access to the network by the client device. The network may be, in particular a WLAN and the client device may be, in particular a mobile communications device.

For example, a network comprises an access point for communicating with one of a plurality of client devices through a communications channel, the access point providing access to the network based on an authentication of the client device via an authentication server according to an authentication protocol. The access point is further responsive to an access response from the authentication server authenticating one of the client devices having requested access to the network, which request was forwarded to the authentication server via the access point, the access response containing a parameter having a value indicative of the length of available continued access of the client device based on remaining user credit, so as to cause the access point to initiate a re-authentication process upon the expiration of a time period corresponding to the parameter value, thereby requiring re-authentication of the client device before granting the client device further access to the network. The network may be, in particular a WLAN and the client device may be, in particular a mobile communications device.

### BRIEF DESCRIPTION OF THE DRAWINGS

The present invention is best understood in light of the detailed description and the drawings where:
FIG. 1 is a block diagram illustrating an exemplary architecture embodying the principles of the present invention.
FIG. 2A is a message exchange diagram illustrating communications occurring between the wireless LAN, the authentication server, and the mobile communications device components of the system of FIG. 1 for authenticating/de-authenticating user access to the WLAN according to an embodiment of the invention.
FIG. 2B is an exemplary Session-Timeout parameter packet format formed as part of an access response message for triggering re-authentication of a mobile communications device according to the principles embodied in the present invention.
FIG. 3 is an exemplary flow diagram illustrating operation of a metering method for calculating Session-Timeout data according to the principles embodied in the present invention.
FIG. 4 is an alternative exemplary flow diagram illustrating operation of a metering method for calculating Session-Timeout data according to the principles embodied in the present invention.

### DETAILED DESCRIPTION

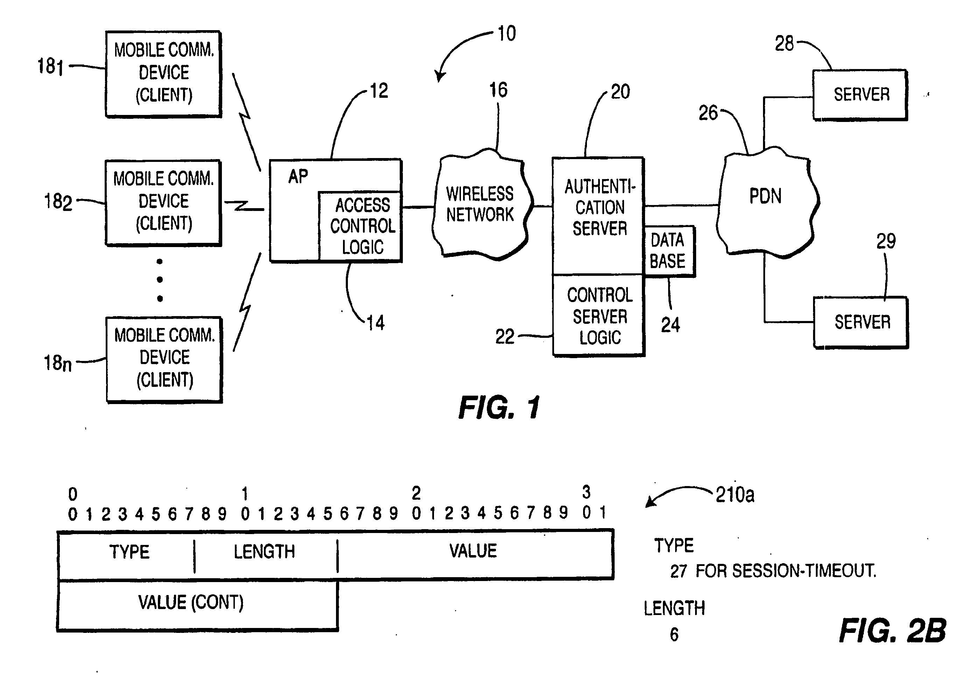

The present invention in the form of one or more exemplary embodiments will now be described. FIG. 1 is a block diagram illustrating an exemplary embodiment of the present invention. Referring to FIG. 1, the exemplary embodiment includes a system 10 having an access point 12 with access control software or logic 14 residing thereon. In one exemplary implementation, the access point 12 is a WLAN (wireless local area network) access point and the access control software 14 is an 802.1 x extensible authentication protocol (EAP). Based on the disclosure and teachings provided herein, a person of ordinary skill in the art will appreciate other communication protocols that can be used to implement the present invention. When active, the access control software 14 provides a number of functions to allow the access point 12 to enable or disable a user's access to the WLAN 16.

When activated, the access control software 14 receives an access request from a user of one of a plurality of mobile communications devices (18₁, 18₂, ...18ₙ) wherein the particular wireless client or mobile communications device 18₁ is attempting to contact the access point 12 to establish access to the communications network 16, such as a WLAN. The AP 12 forwards the request to a corresponding authentication server 20 configured to authenticate the user based on credit information, such as account balance, pre-paid credit charges, and the like. It should be noted that there may be additional networks between wireless network 16 and the authentication server 20 including, for example, wired, wireless and satellite networks. A data base 24 associated with the authentication server stores and maintains the user-based credit balance information. In one configuration, the authentication server 20 may access the account information directly. Optionally, server 20 may operate as a proxy for another accounting/authentication server 28, 29 over a network 26 (such as a private data network or PDN) wherein servers 28, 29 operate as a final authentication server having access to the user credit records (e.g., a server controlled by the credit card based issuing agency or pre-paid data card issuer). When an access accept response message is received by AP 12 from the authentication server 20 authenticating the user, AP 12 enables access of the associated client device 18 to the WLAN.

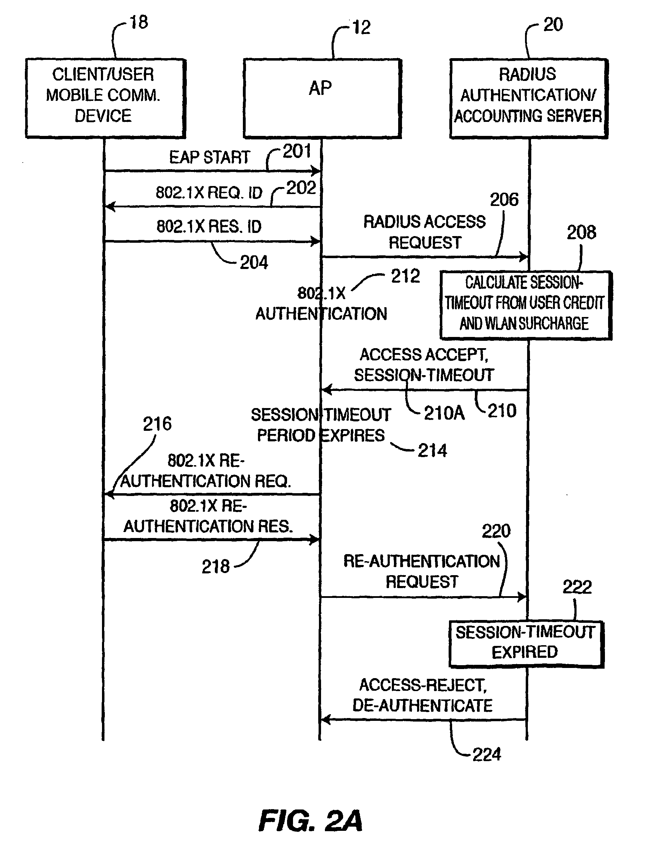

In accordance with an aspect of the present invention, authentication server 20 includes control server logic 22 for metering operator usage and/or parameterize a corresponding communication session. The control server logic 22 includes usage parameters and/or business rules based on a number of criteria including, for example, (a) maximum session time (e.g., in time or monetary units); (b) maximum data volume (increasing or decreasing); (c) bandwidth (uplink and/or downlink) (e.g., in bytes or monetary units); (d) pop-ups, warnings, and grace periods; (e) varying rates by time of day, day of week (e.g., charge more during rush hour); and (f) limiting access to a specific time of day, day of week, or to multiple time periods for example based on user credit information. In one configuration, a parameter associated with an access response message directed to the AP for authenticating the user and allowing access to the WLAN, is used to trigger an authentication (or re-authentication) request from the AP to re-authenticate the user of the mobile communications device or client based on credit information, when the parameter value reaches a given threshold value. In an exemplary embodiment, the Session-Timeout parameter or attribute 210a (FIG. 2B) of the RADIUS authentication server having a packet format and protocol described in RFC 2865 is used to achieve this result. More particularly, control server logic 22 (FIG. 1) determines various usage costs, such as the charge rate of the WLAN, and calculates the maximum available access time in units (e.g. days, hours, minutes, seconds, etc.) for the particular user based on the amount of credit balance the user has. A fractional portion of that value (which may include the entire value) is included in the Session-Timeout parameter provided within the access response message returned to the AP. Upon the expiration of the session timeout period value contained within the access response message received by the AP, the access control logic 14 of the AP then triggers an 802.1X re-authentication request message 216 (see FIG. 2A) to be sent to the user to initiate a re-authentication in order to maintain access to the network.

For example, if a user has an account balance of $20 stored in an accounting data base 24 accessible by server 20, and the wireless LAN charge rate is $2 per hour, then the maximum possible time the user can remain attached to the WLAN would be calculated to be 10 hours. The authentication server control logic 22 may set the Session-Timeout parameter as a fraction of the maximum 10 hours available (e.g. as a 1 hour Session-Timeout value). The Session-Timeout parameter or attribute 210a is sent by the RADIUS server 20 to the AP 12 as part of an access accept message 210 in accordance with the RADIUS protocol described in RFC 2865. In one configuration, this attribute sets the maximum number of seconds of service to be provided to the user before termination of the session or prompt. In a preferred embodiment pursuant to the RFC 2865 protocol, the Session-Timeout attribute 210a sent in an access-accept message along with a Termination-Action value of RADIUS-Request, specifying the maximum number of seconds of service provided prior to re-authentication. In this case, the Session-Timeout attribute is used to load the reAuthPeriod constant within the Reauthentication Timer state machine of 802.1X. This is sent by the authentication server to the AP in the Access-Accept (or Access-Challenge) message. FIG. 2B illustrates the format for the Session-Timeout parameter or attribute 210a in accordance with RFC 2865.

The Session-Timeout parameter value 210a is then used to trigger re-authentication requests for the user, such that the AP transmits a re-authentication request to the user of the mobile communications device 18 at the end of every Session-Timeout period or when the Session-Timeout parameter value falls below a threshold value, where the threshold value may be a percentage of the Session-Timeout parameter value. Under normal operations, the user credentials are re-sent to the server for verification and the authentication process is repeated.

FIG. 2A illustrates an exemplary operational flow of messages between the client/user, the AP and the authentication/accounting server in a time-based re-authentication scenario for controlling access based on credit information according to an aspect of the present invention. A proxy server may be added between the AP and the authentication/accounting server, but this configuration would not alter the messages exchanged and has been omitted in this diagram.

Referring to FIG. 2A, as an operation between client/user of mobile communication device 18 and an AP 12, the user of the client device 18 sends an EAP_START message (201) to the AP incorporating IEEE 802.1 x function to request an access to public WLAN 16. As a response, the AP sends a REQUEST_ID message (202) to the user device, and the user device answers with a user identification (ID) code as a RESPONSE_ID message (204) to the AP. After receiving the RESPONSE_ID message from the user device, the AP transmits a RADIUS Access Request message (206) to RADIUS authentication/accounting server 20. The authentication/accounting server operates to verify the user device including verifying a user password and/or other user credentials (e.g. name, client ID, port ID, etc.) as well as determining the amount of access time/volume available to the user based on available credit information including user credit balance, WLAN charges or other premiums.

The RADIUS authentication/accounting server (AS) 20 then calculates (208) the Session-Timeout parameter value based on the user credit information (which as previously discussed may be a fraction of the maximum available access time/volume) and, upon authentication, transmits the resultant Access Accept message 210 to the AP including the Session-Timeout parameter value 210a to the AP.

In response, the AP may transmit an authentication success message to the user device, and allows the user access to the network. In one configuration, the AP stores a value indicative of the Session-Timeout parameter value. A counter within the WLAN access control software logic determines when the Session-Timeout parameter value has expired (214), and upon expiration, the control logic transmits to the user device a RE-AUTHENTICATION_REQUEST message (216) requesting that the user device re-authenticate itself before allowing further access to the network.

The user device responds to the AP with a RE-AUTHENTICATION_RESPONSE message (218) including the relevant credential information, which the AP forwards in a re-authentication request (220) to AS 20. The AS 20, in response to the re-authentication request, determines whether the overall session time/volume period has expired based on the maximum available credit (222). If so, an access reject response message 224 is returned to the AP indicating an authorization failure. The AP transmits a failure message to the user device (e.g. EAP_fail) and disassociates the user from further access to the WLAN. Otherwise, the user is re-authenticated by the server 20, a Session-Timeout parameter value is calculated and provided (210a) in an access accept response (210) sent to the AP, and the user device is granted continued access to the WLAN.

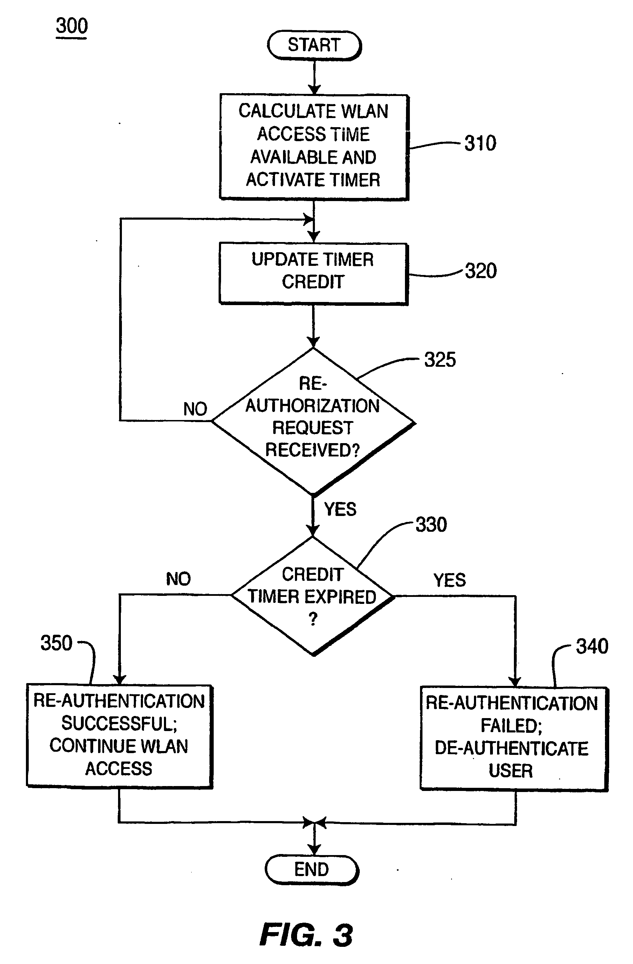

In an exemplary embodiment of the present invention, the control server logic 22 of authentication/accounting server 20 includes a timer module 300 (see FIG. 3) associated with each authenticated user for determining the total amount of time available for user access and whether the timeout period has expired as in step 222 of FIG. 2A. FIG. 3, taken in conjunction with the message exchange diagram of FIG. 2A, illustrates an exemplary flow associated with the operation of a timer module. The timer module includes a credit timer corresponding to the remaining credit balance on the user account. The authentication/accounting server 20 determines the WLAN access time credit available and activates a timer or other such counter (step 310) associated with the maximum available credit balance. In one embodiment, the Session-Timeout parameter value 210a (FIG. 2A) calculated in step 208 of FIG. 2A may correspond to the credit timer value, or may be a fraction of the total credit timer value. The credit timer value is updated (e.g. decremented) based on the passage of one of time and traffic volume units (step 320). In the event that a re-authentication request is received (step 325) by the RADIUS authentication/accounting server as in step 220 of FIG. 2A, the server checks the credit timer module to determine if the timer has expired (step 330). If so, the server will automatically send an authentication failure message (step 340) such as an access reject, de-authenticate message (224 of FIG. 2A) to the AP 12. This, in turn, will terminate user access to the WLAN. Re-authentication requests for a given user that are received by the RADIUS authentication/accounting server prior to expiration of the associated credit timer module are treated in the normal manner by simply re-authenticating the user, thereby enabling user continued access to the WLAN (step 350).

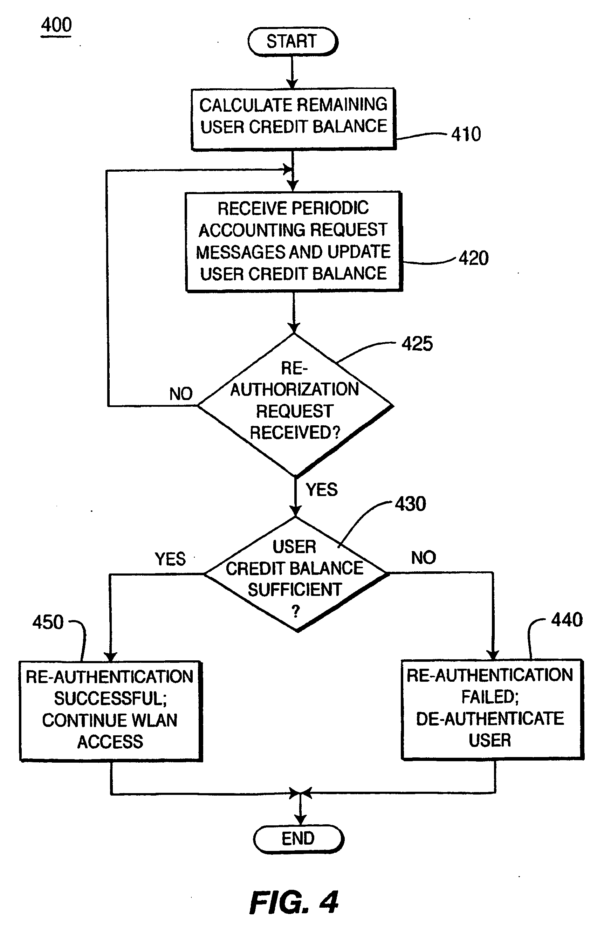

An alternative implementation that does not require the authentication server to execute a credit timer is described with respect to FIG. 4. When the user attempts to login to the WLAN system by providing some form of credentials, the authentication server 20 calculates the remaining user credit balance in certain units (e.g. time units, traffic volume) (step 410). Server 20 receives periodically accounting messages (in units of time or traffic volume, for example) from the AP (step 420). Such messages and message formats are transmitted in accordance with RFC 2866, including accounting request messages/packets from the AP to the server 20 (which may be the accounting server or act as proxy to an accounting server) to provide updated account information for a service provided to a user. Upon successful receipt and recordation of the updated accounting records, server 20 provides an accounting response message/packet to the AP. The server updates (e.g. decrements) the credit units based on the received account information until the credits reach a given threshold (e.g. zero or a negative balance). Each time that a re-authentication of a user occurs (step 425), the server looks up the remaining credit unit balance and sends an authentication failure message to the AP when the credit balance units fall below the threshold (steps 430, 440). The access control software 14 then instructs the access point 12 to terminate (or disassociate) the communication session with the client 18. Otherwise, the user is re-authenticated, a Session-Timeout parameter value is calculated, and the user device is granted continued access to the WLAN (step 450).

As previously mentioned, the present invention finds suitable application in a system wherein the accounting for user access of the WLAN is based on time units, but other accounting units may also be used, including for example, bandwidth used, traffic volume or amounts of other resources used by the user. For volume-based account users, the Session-Timeout period (parameter value) may vary from period to period based on traffic volume that passes through the AP. In this case, a Session-Timeout period may be defined as a variable time duration in which a user transfers a fixed amount of traffic (e.g. in bytes). A Session-Timeout period may be set to expire each time a given amount of bytes (e.g. every 1 MB) of traffic volume. In one configuration, the access logic 14 of the AP 12 would send a re-authentication request once a user transfers 1 MB of traffic and then reset a byte counter within the AP logic.

It should be understood that the present invention as described above can be implemented using software, firmware, hardware or a combination of those implementations, in a distributed or integrated manner. More particularly, the present invention can be implemented on a recording medium that can be read from by a computer with a program/code that is readable by the computer. The recording medium that can be read from by a computer may include any kind of recording devices in which data that is readable by the computer is stored. Examples of the recording medium include ROM, RAM, CD-ROM, magnetic tape, hard discs, floppy discs, flash memory, optical data storage devices, and even carrier wave, for example, transmission over the Internet. Moreover, the recording medium may be distributed among computer systems that are interconnected through a network, and the present invention may be stored and implemented as a program/code in the distributed system. Based on the disclosure and teachings provided herein, a person of ordinary skill in the art will appreciate other ways and/or methods that can be used to implement the present invention.

## Claims

1. A method for processing user requests for credit based network access comprising:
receiving, by an access point (12) in the network (16), a user request for user access from a client device (18) according to an authentication protocol;
forwarding, by said access point (12), user credentials to an authentication server (20) in response to said user request;
receiving, by said access point (12), an access response from said authentication server (20) authenticating said user access for said client device (18), the access response containing a parameter having a credit value indicative of a length of available continued access of the client device (18) to the network (16) based on remaining user credit;
transmitting, by said access point (12), a re-authorization request to said client device (18) in response to said credit parameter value reaching a threshold value to cause a re-authentication of said client device (18) with said network (16) to occur; and
receiving from said client device (18) and forwarding, by said access point (12), user credentials to said authentication server (20) before granting further access to the network (16) by said client device (18).

2. The method of claim 1, wherein said parameter comprises a session-timeout parameter associated with IEEE 802.1X authentication protocol.

3. The method of claim 1, further comprising transmitting by said authentication server (20), a re-authentication response for re-establishing access to said network (16) based on said credit parameter value associated with the client device (18) on said authentication server (20).

4. The method of claim 3, wherein the re-authentication response is based on the results of a comparison of said credit parameter value with said threshold value by said authorization server (20).

5. The method of claim 1, wherein said credit parameter value contained in said access response is based on one of: a) time usage; and b) traffic volume usage.

6. The method according to claim 1, wherein said network (16) is a wireless Local Area network,WLAN, and further wherein said client device (18) is a mobile communications device.

7. The method of claim 1, further comprising:
calculating, by said authentication server (20) in response to said user credentials, a session-timeout parameter value based on remaining user credit and network charges associated with said client device (18), said session-timeout parameter value indicative of the length of available continued access to the network (16);
embedding, by said authentication server (20), said session-timeout parameter value in said access response message authenticating said associated client device (18) for network access;
activating, by said authentication server (20), a credit timer having a value indicative of remaining user credit balance associated with said client device (18), said credit timer decremented according to a temporal access usage; and
receiving by said authentication server (20) said user credentials in response to said re-authorization request for re-authenticating said user access for said associated client device (18), comparing said credit timer value associated with said client device (18) with a predetermined threshold value, and determining whether said client device (18) is de-authenticated from further access to the network (16) based on said comparison.

8. The method of claim 7, further comprising transmitting by said authentication server (20) a de-authentication response message to said access point (12) when said credit timer value is below said predetermined threshold value.

9. A system comprising:
an access point (12) for communicating with one of a plurality of client devices (18₁, 18₂,...,18ₙ) through a communications channel, said access point providing access to a network (16) based on an authentication of said client device (18) via an authentication server (20) according to an authentication protocol,
wherein said access point (12) is further responsive to an access response from an authentication server (20) authenticating one of said client devices (18₁, 18₂,...,18ₙ) having requested access to said network (16), which request was forwarded to said authentication server (20) via said access point (12), said access response containing a parameter having a value indicative of the length of available continued access of the client device (18) based on an indicator of remaining user credit, so as to cause said access point (12) to initiate a re-authentication process upon the expiration of a threshold value corresponding to said parameter value, by requiring the client device (18) to re-provide user credentials to permit re-authentication of the client device (18) before granting the client device (18) further access to the network (16).

10. The system of claim 9, wherein the network (16) operates using an 802.1 X authentication protocol, and wherein the authentication server (20) is a RADIUS authentication server and further wherein said network (16) is a wireless Local Area Network (WLAN) and said client device (18) is a mobile communications device.

11. The system of claim 9, wherein said parameter value comprises a session-timeout parameter.

12. The system of claim 10, wherein said RADIUS authentication server (20) contains memory for storing said indicator of remaining user credit.

13. The system of claim 9, wherein said parameter value contained in said access response is based on one of: a) time usage; and b) traffic volume usage.

14. The system of claim 12, wherein in response to a re-authentication request associated with the client device (18) received from the access point (12), the authentication server (20) is able to retrieve said indicator of remaining user credit and to deny re-authentication of said client device (18) when said indicator of remaining user credit drops below a threshold value.

15. The system of claim 14, wherein the indicator of remaining user credit comprises a credit timer indicative of the remaining credit balance of said user account, said credit timer being decremented according to a temporal access usage to the network (16) by the client device (18).

16. The system of claim 14, wherein the authentication server (20) is able to periodically update the credit timer of said user account in units of: a) time and b) traffic volume.

## Patentansprüche

1. Verfahren zum Verarbeiten von Nutzeranforderungen für einen auf Kredit beruhenden Netzzugang, wobei das Verfahren umfasst:
Empfangen einer Nutzeranforderung für den Nutzerzugang von einer Clientvorrichtung (18) in Übereinstimmung mit einem Authentifizierungsprotokoll durch einen Zugangspunkt (12) in dem Netz (16) ;
Weiterleiten von Nutzerberechtigungsnachweisen zu einem Authentifizierungsserver (20) durch den Zugangspunkt (12) als Antwort auf die Nutzeranforderung;
Empfangen einer Zugangsantwort von dem Authentifizierungsserver (20), die den Nutzerzugang für die Clientvorrichtung (18) authentifiziert, durch den Zugangspunkt (12), wobei die Zugangsantwort einen Parameter mit einem Kreditwert enthält, der auf der Grundlage des verbleibenden Nutzerkredits eine Länge des verfügbaren weiteren Zugangs der Clientvorrichtung (18) zu dem Netz (16) angibt;
Senden einer Anforderung zur erneuten Autorisierung an die Clientvorrichtung (18) als Antwort darauf, dass der Kreditparameterwert einen Schwellenwert erreicht, durch den Zugangspunkt (12), um zu veranlassen, dass eine erneute Authentifizierung der Clientvorrichtung (18) bei dem Netz (16) stattfindet; und
Empfangen von Nutzerberechtigungsnachweisen von der Clientvorrichtung (18) und deren Weiterleiten an den Authentifizierungsserver (20) durch den Zugangspunkt (12), bevor weiterhin Zugang zu dem Netz (16) durch die Clientvorrichtung (18) gewährt wird.

2. Verfahren nach Anspruch 1, wobei der Parameter einen Sitzungszeitablaufparameter umfasst, der dem Authentifizierungsprotokoll IEEE 802.1X zugeordnet ist.

3. Verfahren nach Anspruch 1, das ferner das Senden einer Antwort zur erneuten Authentifizierung zum Wiederherstellen des Zugangs zu dem Netz (16) auf der Grundlage des der Clientvorrichtung (18) zugeordneten Kreditparameterwerts in dem Authentifizierungsserver (20) durch den Authentifizierungsserver (20) umfasst.

4. Verfahren nach Anspruch 3, wobei die Antwort zur erneuten Authentifizierung auf den Ergebnissen eines Vergleichs des Kreditparameterwerts mit dem Schwellenwert durch den Autorisierungsserver (20) beruht.

5. Verfahren nach Anspruch 1, wobei der in der Zugangs-antwort enthaltene Kreditparameterwert beruht auf: a) der Zeitnutzung; oder b) der Verkehrsvolumennutzung.

6. Verfahren nach Anspruch 1, wobei das Netz (16) ein drahtloses lokales Netz, WLAN, ist und wobei die Clientvorrichtung (18) ferner eine Mobilkommunikationsvorrichtung ist.

7. Verfahren nach Anspruch 1, das ferner umfasst:
Berechnen eines Sitzungszeitablaufparameterwerts auf der Grundlage des verbleibenden Nutzerkredits und
verbleibender Netzgebühren, die der Clientvorrichtung (18) zugeordnet sind, durch den Authentifizierungsserver (20) als Antwort auf die Nutzerberechtigungsnachweise, wobei der Sitzungszeitablaufparameterwert die Länge des verfügbaren weiteren Zugangs zu dem Netz (16) angibt;
Einbetten des Sitzungszeitablaufparameterwerts in die Zugangsantwortnachricht, die die zugeordnete Clientvorrichtung (18) für den Netzzugang authentifiziert, durch den Authentifizierungsserver (20) ;
Aktivieren eines Kreditzeitgebers mit einem Wert, der das der Clientvorrichtung (18) zugeordnete verbleibende Nutzerkreditguthaben angibt, durch den Authentifizierungsserver (20), wobei der Kreditzeitgeber in Übereinstimmung mit einer zeitlichen Nutzung des Zugangs dekrementiert wird; und
Empfangen der Nutzerberechtigungsnachweise als Antwort auf die Anforderung zur erneuten Autorisierung zum erneuten Authentifizieren des Nutzerzugangs für die zugeordnete Clientvorrichtung (18) durch den Authentifizierungsserver (20), Vergleichen des der Clientvorrichtung (18) zugeordneten Kreditzeitgeberwerts mit einem vorgegebenen Schwellenwert und Bestimmen, ob die Authentifizierung der Clientvorrichtung (18) für den weiteren Zugang zu dem Netz (16) zurückgezogen wird, auf der Grundlage des Vergleichs.

8. Verfahren nach Anspruch 7, das ferner das Senden einer Antwortnachricht zum Zurückziehen der Authentifizierung an den Zugangspunkt (12) durch den Authentifizierungs-server (20) umfasst, wenn der Kreditzeitgeberwert unter dem vorgegebenen Schwellenwert liegt.

9. System, das umfasst:
einen Zugangspunkt (12) zum Kommunizieren mit einer von mehreren Clientvorrichtungen (18₁, 18₂, ..., 18ₙ) über einen Kommunikationskanal, wobei der Zugangspunkt auf der Grundlage einer Authentifizierung der Clientvorrichtung (18) über einen Authentifizierungsserver (20) in Übereinstimmung mit einem Authentifizierungsprotokoll den Zugang zu einem Netz (16) bereitstellt,
wobei der Zugangspunkt (12) ferner auf eine Zugangsantwort von einem Authentifizierungsserver (20) anspricht, die eine der Clientvorrichtungen (18₁, 18₂, ..., 18ₙ), die Zugang zu dem Netz (16) angefordert hat, wobei die Anforderung über den Zugangspunkt (12) an den Authentifizierungsserver (20) weitergeleitet wurde, authentifiziert, wobei die Zugangsantwort einen Parameter mit einem Wert enthält, der die Länge des verfügbaren weiteren Zugangs der Clientvorrichtung (18) auf der Grundlage eines Anzeigers des verbleibenden Nutzerkredits angibt, um zu veranlassen, dass der Zugangspunkt (12) bei Ablauf eines dem Parameterwert entsprechenden Schwellenwerts einen Prozess zur erneuten Authentifizierung initiiert, indem er anfordert, dass die Clientvorrichtung (18) erneut Nutzerberechtigungsnachweise bereitstellt, um die erneute Authentifizierung der Clientvorrichtung (18) zu ermöglichen, bevor der Clientvorrichtung (18) weiterhin Zugang zu dem Netz (16) gewährt wird.

10. System nach Anspruch 9, wobei das Netz (16) unter Verwendung eines Authentifizierungsprotokolls 802.1 X arbeitet und wobei der Authentifizierungsserver (20) ein RADIUS-Authentifizierungsserver ist und wobei das Netz (16) ferner ein drahtloses lokales Netz (WLAN) ist und die Clientvorrichtung (18) eine Mobilkommunikationsvorrichtung ist.

11. System nach Anspruch 9, wobei der Parameterwert einen Sitzungszeitablaufparameter umfasst.

12. System nach Anspruch 10, wobei der RADIUS-Authentifizierungsserver (20) Speicher zum Speichern des Anzeigers des verbleibenden Nutzerkredits enthält.

13. System nach Anspruch 9, wobei der in der Zugangsantwort enthaltene Parameterwert beruht auf: a) der Zeitnutzung; oder b) der Verkehrsvolumennutzung.

14. System nach Anspruch 12, wobei der Authentifizierungsserver (20) als Antwort auf eine von dem Zugangspunkt (12) empfangene der Clientvorrichtung (18) zugeordnete Anforderung zur erneuten Authentifizierung den Anzeiger des verbleibenden Nutzerkredits auslesen kann und die erneute Authentifizierung der Clientvorrichtung (18) verweigern kann, wenn der Anzeiger des verbleibenden Nutzerkredits unter einen Schwellenwert fällt.

15. System nach Anspruch 14, wobei der Anzeiger des verbleibenden Nutzerkredits einen Kreditzeitgeber umfasst, der das verbleibende Kreditguthaben des Nutzerkontos angibt, wobei der Kreditzeitgeber in Übereinstimmung mit einer zeitlichen Nutzung des Zugangs zu dem Netz (16) durch die Clientvorrichtung (18) dekrementiert wird.

16. System nach Anspruch 14, wobei der Authentifizierungsserver (20) den Kreditzeitgeber des Nutzerkontos periodisch aktualisieren kann in Einheiten: a) der Zeit und b) des Verkehrsvolumens.

## Revendications

1. Un procédé pour traiter des requêtes d'utilisateur pour l'accès prépayé à un réseau comprenant :
la réception, par un point d'accès (12) dans le réseau (16), d'une requête utilisateur pour un accès utilisateur à partir d'un dispositif client (18) selon un protocole d'authentification ;
la transmission, par ledit point d'accès (12), d'identifiants de l'utilisateur à un serveur d'authentification (20) en réponse à ladite requête d'utilisateur ;
la réception, par ledit point d'accès (12), d'une réponse d'accès en provenance dudit serveur d'authentification (20) authentifiant ledit accès utilisateur pour ledit dispositif client (18), la réponse d'accès contenant un paramètre disposant d'une valeur de crédit indicative d'une longueur d'accès disponible continu du dispositif client (18) au réseau (16) basée sur le crédit utilisateur restant ;
la transmission, par ledit point d'accès (12), d'une requête de ré-autorisation vers ledit dispositif client (18) en réponse à ladite valeur de paramètre de crédit atteignant une valeur seuil qui provoque une ré-authentification dudit dispositif client (18) auprès dudit réseau (16) ; et
la réception à partir dudit dispositif client (18) et transmission, par ledit point d'accès (12), des identifiants d'utilisateur vers ledit serveur d'authentification (20) avant de continuer à autoriser l'accès au réseau (16) audit dispositif client (18).

2. Le procédé de la revendication 1, dans lequel ledit paramètre comprend un paramètre de délai d'attente de session associé au protocole d'authentification IEEE 802.1X.

3. Le procédé de la revendication 1, comprenant en outre la transmission par ledit serveur d'authentification (20), d'une réponse de ré-authentification pour ré-établir l'accès audit réseau (16) en fonction de ladite valeur de paramètre de crédit associée au dispositif client (18) sur ledit serveur d'authentification (20).

4. Le procédé de la revendication 3, dans lequel la réponse de ré-authentification est basée sur les résultats d'une comparaison de ladite valeur de paramètre de crédit avec ladite valeur seuil par ledit serveur d'autorisation (20).

5. Le procédé de la revendication 1, dans lequel ladite valeur de paramètre de crédit contenue dans ladite réponse d'accès est basée sur une des utilisations suivantes : a) utilisation du temps ; et b) utilisation du volume de trafic.

6. Le procédé selon la revendication 1, dans lequel ledit réseau (16) est un réseau local sans fil, WLAN, et en outre dans lequel ledit dispositif client (18) est un dispositif mobile de communications.

7. Le procédé selon la revendication 1, comprenant en outre :
le calcul, par ledit serveur d'authentification (20) en réponse auxdits identifiants utilisateur, d'une valeur de paramètre de délai d'attente de session en fonction du crédit utilisateur restant et des coûts de réseau associés audit dispositif client (18), ladite valeur de paramètre de délai d'attente de session étant révélatrice de la longueur de l'accès continu disponible au réseau (16) ;
l'intégration, par ledit serveur d'authentification (20), de ladite valeur de paramètre de délai d'attente de session dans ledit message de réponse d'accès authentifiant ledit dispositif client associé (18) pour l'accès au réseau,
l'activation, par ledit serveur d'authentification (20) d'un minuteur de crédit disposant d'une valeur révélatrice du solde du crédit utilisateur restant associé audit dispositif client (18), ledit minuteur de crédit décrémenté selon une utilisation d'accès temporelle ; et
la réception par ledit it serveur d'authentification (20) desdits authentifiants utilisateur en réponse à ladite requête de ré-autorisation pour ré-authentifier ledit accès utilisateur pour ledit dispositif client associé (18), la comparaison de ladite valeur du minuteur de crédit associée audit dispositif client (18) disposant d'une valeur de seuil pré-déterminée, et la possibilité de déterminer si ledit dispositif client (18) est désauthentifié et ne peut plus avoir accès au réseau (16) en fonction de ladite comparaison.

8. Le procédé de la revendication 7, comprenant en outre la transmission par ledit serveur d'authentification (20) d'un message de réponse de désauthentification audit point d'accès (12) lorsque ladite valeur du minuteur de crédit est inférieure à ladite valeur seuil pré-déterminée.

9. Un système comprenant :
un point d'accès (12) pour communiquer avec un dispositif client parmi une pluralité de dispositifs clients (18₁, 18₂,...,18ₙ) via un canal de communication, ledit point d'accès fournissant un point d'accès à un réseau (16) en fonction d'une authentification dudit dispositif client (18) via un serveur d'authentification (20) selon un protocole d'authentification,
dans lequel ledit point d'accès (12) est en outre réactif à une réponse d'accès en provenance d'un serveur d'authentification (20) authentifiant un desdits dispositifs client (18₁, 18₂,...,18ₙ) ayant effectué une requête d'accès audit réseau (16), laquelle requête a été transmise audit serveur d'authentification (20) via ledit point d'accès (12), ladite réponse d'accès contenant un paramètre disposant d'une valeur révélatrice de la longueur d'accès continu disponible du dispositif client (18) en fonction d'un indicateur de crédit utilisateur restant, afin de provoquer une procédure de ré-authentification dudit point d'accès (12) à l'expiration d'une valeur seuil correspondant à ladite valeur de paramètre, en exigeant du dispositif client (18) qu'il fournisse à nouveau les authentifiants utilisateur afin de permettre la ré-authentification du dispositif client (18) avant de continuer à autoriser au dispositif client (18) l'accès au réseau (16).

10. Le système de la revendication 9, dans lequel le réseau (16) fonctionne à l'aide d'un protocole d'authentification 802.1 X, et dans lequel le serveur d'authentification (20) est un serveur d'authentification RADIUS et en outre dans lequel ledit réseau (16) est un réseau local sans fil (WLAN) et ledit dispositif client (18) est un dispositif mobile de communications.

11. Le système de la revendication 9, dans lequel ladite valeur de paramètre comprend un paramètre de délai d'attente de session.

12. Le système de la revendication 10, dans lequel ledit serveur d'authentification RADIUS (20) contient une mémoire pour le stockage dudit indicateur de crédit utilisateur restant.

13. Le système de la revendication 9, dans lequel ladite valeur de paramètre contenue dans ladite réponse d'accès est basée sur une des utilisations suivantes : a) utilisation du temps ; et b) utilisation du volume de trafic.

14. Le système de la revendication 12, dans lequel en réponse à une requête de ré-authentification associée au dispositif client (18) reçue du point d'accès (12), le serveur d'authentification (20) peut récupérer ledit indicateur de crédit utilisateur restant et refuser la ré-authentification dudit dispositif client (18) lorsque ledit indicateur de crédit utilisateur restant est inférieur à une valeur seuil.

15. Le système de la revendication 14, dans lequel l'indicateur de crédit utilisateur restant comprend un minuteur de crédit indicatif du solde de crédit restant sur ledit compte utilisateur, ledit minuteur de crédit étant décrémenté selon une utilisation d'accès temporelle vers le réseau (16) par le dispositif client (18).

16. Le système de la revendication 14, dans lequel le serveur d'authentification (20) est agencé pour mettre à jour périodiquement le minuteur de crédit dudit compte utilisateur dans des unités de a) temps et b) volume de trafic.
